# EUROPÄISCHE PATENTANMELDUNG

(11) **EP 0 678 947 A1**
(43) Veröffentlichungstag der Anmeldung: **25.10.1995**
(21) Anmeldenummer: 95105732.2
(22) Anmeldetag: 18.04.1995
(51) Int. Cl.: H02B 1/052

(54) **Schnellbefestigung zum Aufschnappen eines elektrischen Installationsgerätes auf eine Hutprofilschiene**

(30) Priorität: 18.04.1994 DE 4413386
(71) Anmelder: ABB PATENT GmbH, D-68309 Mannheim (DE)
(72) Erfinder: Goehle, Rolf, D-69181 Leimen (DE); Schmitt, Volker, D-69245 Bammental (DE)
(74) Vertreter: Rupprecht, Klaus, Dipl.-Ing.

(57) **Zusammenfassung**

Die Erfindung betrifft eine Schnappbefestigung zum Aufschnappen eines elektrischen Installationsgerätes auf eine Hutprofilschiene, mit einer festen Nase und einer an einem federnd auf die feste Nase zugedrückten Schieber (10) angeformten bewegbaren Nase (14), die im montierten Zustand des Installationsgerätes hinter die Längskanten einer Hutprofilschiene greifen. Der Schieber (10) weist einen rechteckförmigen plattenartigen Bereich (11) auf, dessen eine Schmalkante U-förmig umgebogen ist, wobei die Außenfläche der U-Form die bewegliche Nase (14) bildet. Im Bereich der U-Form ist an dem plattenartigen Bereich (11) ein auf der Seite der U-Form hochstehender Vorsprung (19) angeformt. Dem Schieber (10) ist ein ortsfest im Installationsgerät festgelegtes Halteelement (22) zugeordnet und zwischen dem Vorsprung (19) und dem Halteelement eine Druckfeder (33) vorgesehen, wobei die Teile so einander zugeordnet sind, daß in einer ersten Betriebsstellung des Schiebers (10) die Feder (33) auf einer Seite einer Totpunktlage (34-34) den Schieber (10) gegen die Hutprofilschiene drückt und in einer zweiten Stellung (35) auf der anderen Seite der Totpunktlage (34) den Schieber (10) von der Hutprofilschiene weg nach außen drückt.

## Beschreibung

Die Erfindung betrifft eine Schnellbefestigung nach dem Oberbegriff des Anspruches 1.

Mit diesen Schnellbefestigungen wird ein elektrisches Installationsgerät, insbesondere ein Leitungsschutzschalter, dadurch auf einer Hutprofilschiene aufgeschnappt, daß der Leitungsschutzschalter mit der festen Nase hinter eine Längskante der Hutprofilschiene gehakt und danach durch Verschwenken die andere Nase über die andere Längskante der Hutprofilschiene geschnappt wird. Eingangsseitig zu einer Reihe von Leitungsschutzschaltern sind die Anschlußklemmen mit einer starren Stromschiene miteinander elektrisch leitend verbunden. Wenn ein Leitungsschutzschalter in einer solchen Reihe demontiert werden soll, dann muß zunächst die Stromschiene spannungsfrei geschaltet und ausgebaut werden, da das Herausdrehen bzw. Entfernen des Leitungsschutzschalters durch die Stromschiene behindert ist.

Um die Demontage eines Leitungsschutzschalters aus einer Reihe von Leitungsschutzschaltern zu erleichtern, sind Schnappbefestigungen bekannt geworden, bei denen der bewegliche Schieber und die bewegliche Nase soweit von der benachbarten Kante der Hutprofiltragschiene entfernt werden kann, daß der Leitungsschutzschalter von der Stromschiene durch Verschieben quer zur Hutprofilschiene in der Ebene der Schenkel von der Stromschiene freikommt und danach senkrecht zu der besagten Ebene abgehoben werden kann.

Bekannt ist, ein Kunststoffederelement als Schieber vorzusehen, welches in zwei Stellungen verrastet werden kann. Bei einer weiteren bekannten Ausführung ist ein Thermoplasthebel am Leitungsschutzschalter vorgesehen, der im Gehäuse drehbar gelagert ist und damit die bewegliche Nase bildet. Diese Ausführung benötigt Platz und ist konstruktiv aufwendig.

Darüberhinaus ist auch durch die DE 41 07 075 A1 eine Schnellbefestigung oder Schnappbefestigung bekannt geworden, die aus mehreren Teilen besteht und einen großen Platzbedarf hat.

Aufgabe der Erfindung ist es, eine Schnellbefestigung oder Schnappbefestigung der eingangs genannten Art zu schaffen, die leicht montierbar ist und mit der das Installationsgerät leicht aufgeschnappt werden kann.

Diese Aufgabe wird erfindungsgemäß gelöst durch die kennzeichnenden Merkmale des Anspruches 1.

Weitere vorteilhafte Ausgestaltungen und Verbesserungen der Erfindung sind den Unteransprüchen zu entnehmen.

Erfindungsgemäß also ist die Schnappbefestigung aus drei Elementen zusammengesetzt, nämlich einem Schieber, an dem die Nase angeformt ist, einem mit dem Schieber formschlüssig gekuppelten Halteelement, welches bezogen auf den Schieber relativ zu diesem hin- und herbewegbar ist, und einer Druckfeder, die zwischen dem Schieber und dem Halteelement angeordnet ist. Im montierten Zustand ist das Halteelement ortsfest im Installationsgerät festgelegt, wogegen der Schieber hin- und herschiebbar ist. Die zwischen dem Halteelement und dem Schieber vorgesehene Druckfeder nimmt zwei stabile Lagen ein, wobei dazwischen eine Totpunktlage vorhanden ist. In der ersten stabilen Lage wird der Schieber gegen die Kante der Hutprofilschiene gedrückt und in der zweiten stabilen Lage hält die Feder den Schieber bezogen auf das Halteelement in einem solchem Abstand von der Hutprofilschiene, daß das Installationsgerät in der Ebene der Schenkel der Hutprofilschiene soweit verschiebbar ist, daß die Anschlußklemme von der Stromschiene freikommt.

Dadurch, daß das Halteelement formschlüssig am Schieber festgelegt ist, was durch die U-förmige oder C-förmige Ausgestaltung des Halteelementes erzielt wird, können der Schieber, die Feder und das Halteelement jeweils getrennt hergestellt und zusammen montiert werden, so daß die drei Teile eine transportierbare und handhabbare Einheit bilden.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigen:
- Fig. 1: eine Aufsicht auf einen Schieber mit Feder und Halteelement,
- Fig. 2: eine Schnittansicht gemäß Schnittlnie II-II der Fig. 1, und

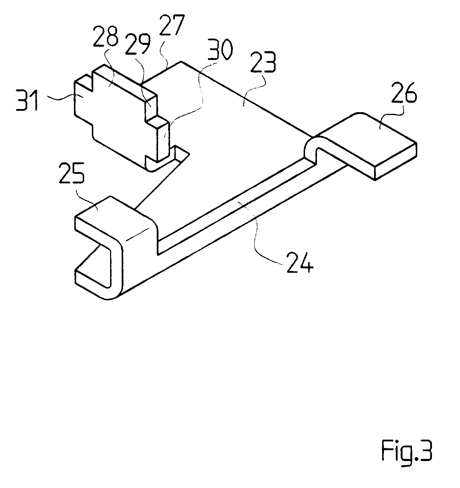

- Fig. 3: eine perspektivische Ansicht eines Halteelementes.

Die Schnappbefestigung umfaßt einen Schieber 10, der einen rechteckförmigen Plattenbereich 11 aufweist, an dessen einem Ende eine rechteckförmige Ausnehmung 12 vorgesehen ist; an der benachbarten Endkante des plattenartigen Bereiches befindet sich senkrecht dazu eine Wand 13, die das Abziehen des Schiebers 10 in Pfeilrichtung P durch Einbringen eines Werkzeuges, z. B. eines Schraubendrehers, gestattet. Am anderen Ende ist der plattenartige Bereich 10 U-förmig zurückgebogen, wobei die Außenseite der U-Form die Nase 14 bildet, die gegen die Außenkante des freien Schenkels der Hutprofilschiene (nicht gezeigt) zum Anliegen kommt. Der freie Schenkel 15 der U-Form ist zweigeteilt in Gabelzinken 15a und 15b, an deren Enden nach außen ragende Nasen 16 und 17 angeformt sind, die im montierten Zustand hinter einen Anschlag an einem Gehäuse 18 eines Installationsgerätes zum Anliegen kommen, so daß die Bewegung des Schiebers 10 in Pfeilrichtung P₁ begrenzt ist.

Zwischen den Gabelzinken 15a und 15b ist am plattenartigen Bereich 11 eine senkrecht dazu vorspringende Anschlagnase 19 angeformt, die einen Vorsprung 20 auf der innenliegenden Kante 21 der Anschlagnase 19 aufweist. Die Höhe des Vorsprunges 20, gemessen senkrecht zum Plattenbereich 11, ist kleiner als die Höhe der Anschlagnase 19.

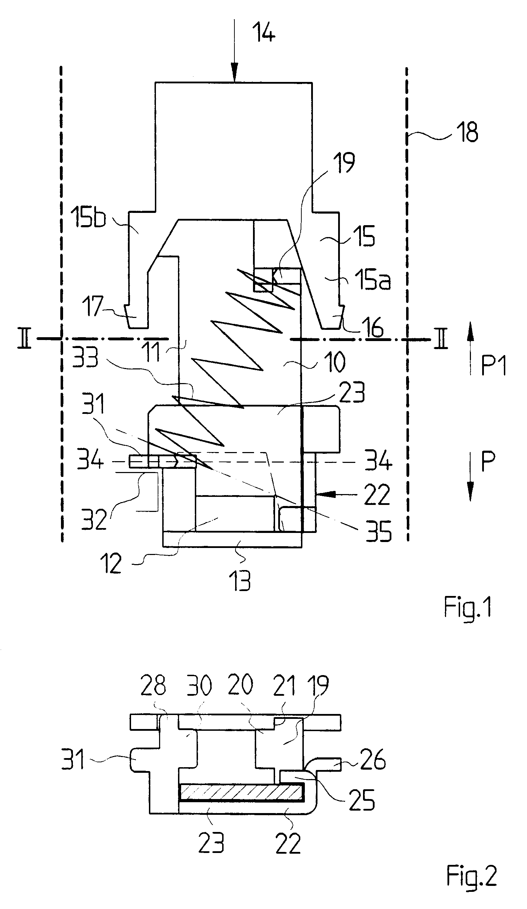

Der plattenförmige Bereich 11 ist umfaßt von einem Halteelement 22, das ein Basisteil 23 aufweist, an dessen einer Längskante senkrecht zum Basisteil 23 eine Wandung 24 hochsteht, an der an einem Ende des Basisteils 23 eine parallel zum Basisteil 23 verlaufende Lasche 25, die auf der Innenseite der Wandung 24 vorspringt, und am anderen Ende des Basisteils 23 eine weitere Lasche 26 angeformt sind, die in entgegengesetzte Richtung, also von dem Basisteil oder -bereich 23 weg vorspringt. Wie aus Fig. 2 ersichtlich, sind die beiden Laschen 25 und 26 bezogen auf das Basisteil 23 in unterschiedlichen Höhen angeordnet: die Lasche 26 ist geringfügig höher als die Lasche 25. Beide Laschen verlaufen also senkrecht zur Längskante mit der Wandung 24 und parallel zum Plattenbereich 23.

An der entgegengesetzt liegenden Längskante 27 ist ein senkrecht zur Längskante 27 bzw. zur Randwand 24 und senkrecht zu dem Basisbereich 23 hochgebogener Haltesteg 28 angeformt, an dessen zur Randwand 24 hingerichteten, senkrecht zu dem Basisbereich 23 verlaufenden Kante 29 ein Führungsvorsprung 30 angeformt ist, der in seinen Abmessungen dem Vorsprung 20 gleicht. In entgegengesetzte Richtung ist von dem Steg 28 ein Vorsprung 31 angeformt, der, wie aus Fig. 1 ersichtlich, im montierten Zustand gegen einen Anschlag 32 am Gehäuse 18 des Installationsgerätes zum Anliegen kommt.

Zwischen den Vorsprüngen 19 und 28 ist eine Druckfeder 33 vorgesehen, die in der in Fig. 1 gezeigten Stellung den Schieber bezogen auf das Halteelement 22 in Pfeilrichtung P₁ drückt.

Wenn nun der Schieber 13 in Pfeilrichtung P verschoben wird, dann überwindet die Feder 33 eine Totpunktlage 34-34, die senkrecht zur Längserstreckung des Plattenbereiches 11 verläuft; sie schnappt dann in die durch die strichpunktierte Linie 35 angedeutete Stellung um, in der der Schieber 10 bezogen auf das Halteelement und damit auch bezogen auf das Gehäuse festgehalten wird. Die Nase 14 ist dann soweit in Pfeilrichtung P verschoben, daß eine nachträgliche Montage und Demontage eines Schaltgerätes, z. B. eines Leitungsschutzschalters im Verdrahtungsverbund ermöglicht ist, da ohne daß eine Demontage benachbarter Geräte oder einer Stromsammelschiene erforderlich wird.

Wenn das Schaltgerät wieder montiert werden soll, dann wird der Schieber ganz einfach bezogen auf das Halteelement 22 in Pfeilrichtung P₁ gedrückt; sobald die Feder 33 die strichlierte Totpunktlage 34-34 überschritten hat, schnappt der Schieber 10 von selbst in die in Fig. 1 gezeigte Stellung.

Aufgrund der U-förmigen Zuordnung der Lasche 25 zum Basisbereich 23 umgreift das Halteelement den plattenartigen Bereich 11 und wird damit am plattenartigen Bereich zusammen mit der Feder 33 festgelegt und fixiert, so daß diese drei Elemente miteinander eine vormontierbare Einheit bilden.

## Patentansprüche

1. Schnappbefestigung zum Aufschnappen eines elektrischen Installationsgerätes auf eine Hutprofilschiene, mit einer festen Nase am Gehäuse des Installationsgerätes und einer an einem federnd auf die feste Nase zugedrückten Schieber angeformten bewegbaren Nase, die im montierten Zustand des Installationsgerätes hinter die Längskanten einer Hutprofilschiene greifen, wobei der Schieber einen rechteckförmigen plattenartigen Bereich aufweist, dessen eine Schmalkante U-förmig umgebogen ist, wobei die Außenfläche der U-Form die Nase bildet, dadurch gekennzeichnet, daß im Bereich der U-Form an dem plattenartigen Bereich ein auf der Seite der U-Form hochstehender Vorsprung (19) angeformt ist, daß dem Schieber ein ortsfest im Installationsgerät festgelegtes Halteelement (22) zugeordnet ist und daß zwischen dem Vorsprung (19) und dem Halteelement eine Druckfeder (33) vorgesehen ist, wobei die Teile so einander zugeordnet sind, daß in einer ersten Betriebsstellung des Schiebers die Feder auf einer Seite einer Totpunktlage (34-34) den Schieber gegen die Hutprofilschiene drückt und in einer zweiten Stellung (35) auf der anderen Seite der Totpunktlage (34) den Schieber von der Hutprofilschiene weg nach außen drückt.

2. Schnappbefestigung nach Anspruch 1, dadurch gekennzeichnet, daß die Fixierung des Halteelementes (22) durch die Feder (33) bewirkt ist.

3. Schnappbefestigung nach Anspruch 2, dadurch gekennzeichnet, daß das Halteelement an einer Kante eine U-förmige Führung (25) aufweist, deren Schenkel den plattenförmigen Bereich (10) an einer ihrer Längskante umfassen.

4. Schnappbefestigung nach Anspruch 3, dadurch gekennzeichnet, daß an der anderen Längskante des Halteelementes ein Vorsprung (31) vorgesehen ist, der in eine Ausnehmung eingreift, die das Halteelement im montierten Zustand gegen Verschieben fixiert.

5. Schnappbefestigung nach einem der vorherigen Ansprüche 2 bis 4, dadurch gekennzeichnet, daß das Halteelement ein Basisbereich (23) aufweist, der eine Rechteckform aufweist und daß die U-Form (25) an einer Längskante und der Vorsprung (28) an einem Haltesteg an der anderen Längskante angeformt ist.
